# EUROPEAN PATENT APPLICATION

(11) **EP 1 876 366 A2**
(43) Date of publication of application: **09.01.2008**
(21) Application number: 07013322.8
(22) Date of filing: 06.07.2007
(51) Int. Cl.: F16C 33/66

(54) **Lubricating structure of roller bearing**

(30) Priority: 06.07.2006 JP 2006186713
(71) Applicant: JTEKT Corporation, Osaka-shi Osaka 542-8502 (JP)
(72) Inventor: Hayashi, Yuichiro, Osaka-shi Osaka 542-8502 (JP)
(74) Representative: Schaeberle, Steffen

(57) **Abstract**

A lubricating structure of a roller bearing (1) including an inner ring (11), an outer ring (12) and a plurality of rolling elements (13) disposed between the inner (11) and outer (12) rings in a circumferential direction, includes: an annular lubricating member (14) that is formed of solid lubricant and arranged on a side surface of the rolling elements (13) in an axial direction; and a resilient member (15) that urges the lubricating member (14) against the rolling elements (13). With this arrangement, it is possible to depress breakage of components at a time of assembling the roller bearing, and to enhance a yield of the roller bearing.

## Description

### BACKGROUND OF THE INVENTION

The present invention relates to a lubricating structure of a roller bearing which includes an inner ring, an outer ring, and a plurality of rolling elements disposed between the inner and outer rings in a circumferential direction.

Conventionally, in case where a roller bearing which includes an inner ring, an outer ring, and a plurality of rolling elements disposed between the inner ring and the outer ring in a circumferential direction is used in high temperature atmosphere such as in a heat treating furnace, grease or oil cannot be used as lubricant. Therefore, a cage is formed of graphite functioning as solid lubricant, and the roller bearing is lubricated by making use of transfer of graphite from the cage to the rolling elements. As disclosed in JP-A-H01-126426, the cage of the roller bearing of this type is formed in a crown shape in which pockets for holding the rolling elements have openings in a part which open to one end in an axial direction. The rolling elements are inserted into the pockets from these openings. A width of the opening in each of the pockets is set to be smaller than a diameter of the rolling element so that the rolling element may not fall in the axial direction of the cage. The cage is so constructed that pillar portions adjacent to the openings of the pockets are resilientally deformed, when the rolling elements pass through the openings of the pockets.

By the way, the cage as described above is assembled to the roller bearing while holding the rolling elements at equal intervals, after the rolling elements have been incorporated between the inner ring and the outer ring. Therefore, all the rolling elements pass through the openings of the pockets simultaneously when the cage is assembled. For this reason, the pillar portions of the cage cannot be deformed in the circumferential direction, but are largely deformed in a radial direction. Because graphite which is material for the cage is poor in rigidity and strength, and weak, the cage may be sometimes broken when the pillar portions have been deformed in this manner. In the cage as disclosed in JP-A-H01-126426, for the purpose of depressing such deformation, the width of the opening of the pocket is set to be about 97 to 99% of the diameter of the rolling element. However, breakage of the cage still occurs, even though the width of the opening has been so set, and improvement of yields has been desired.

### SUMMARY OF THE INVENTION

The invention is made in view of the above described circumstances, and it is an object of the invention to provide a lubricating structure of a roller bearing which can enhance a yield of the roller bearing when it is assembled, while lubrication of the roller bearing is reliably conducted.

In order to attain the above described object, a first aspect of the invention provides a lubricating structure of a roller bearing including an inner ring, an outer ring and a plurality of rolling elements disposed between the inner and outer rings in a circumferential direction, the lubricating structure comprising:
an annular lubricating member that is formed of solid lubricant and arranged on a side surface of the rolling elements in an axial direction; and
a resilient member that urges the lubricating member against the rolling elements.

According to this structure, the annular lubricating member formed of the solid lubricant is provided on the side surface of the plurality of rolling elements which are disposed between the inner ring and the outer ring in the circumferential direction, and the lubricating member is urged against the rolling elements by the resilient member. Therefore, lubrication of the roller bearing can be performed by the lubricating member and the resilient member which are provided on the side surfaces of the respective rolling elements in the axial direction. Specifically, because the lubricating member is urged against the side surfaces of the rolling elements in the axial direction, the solid lubricant is transferred to the rolling elements, and lubrication of the roller bearing is performed. As the results, a structure in which the rolling elements are incorporated into the pockets of the cage which is formed of the solid lubricant, as in the related art, is eliminated, whereby it is possible to depress breakage of components at a time of assembling the roller bearing, and to enhance the yield of the roller bearing.

A second aspect of the invention provides the lubricating structure of the first aspect in which the resilient member comprises an annular wave washer which urges the lubricating member, and a holding member for holding the wave washer in a compressed state is further provided.

According to this structure, because the resilient member is the annular wave washer which presses the lubricating member, and the wave washer is held by the holding member in a compressed state, the annular lubricating member can be totally pressed by employing the wave washer having a simple shape. As the results, it is possible to construct the lubricating structure so that the solid lubricant can be reliably transferred to the rolling elements.

A third aspect of the invention provides a lubricating structure of the first or second aspect, in which the two lubricating members are respectively provided on opposite side surfaces of the rolling elements in the axial direction.

According to this structure, because the two lubricating members are respectively provided on the opposite side surfaces of the rolling elements in the axial direction, it is possible to construct the lubricating structure so that the rolling elements can be held in good balance by means of the lubricating members on the opposite side surfaces. Moreover, because contact points between the lubricating members and the rolling elements increase, it is possible to enhance lubricating effect of the roller bearing.

A fourth aspect of the invention provides a lubricating structure of first, second or third aspect, in which the roller bearing is a full complement ball bearing or a full complement roller bearing in which positions of the rolling elements in the circumferential direction are restricted by relative interference between the adjacent rolling elements.

According to this structure, because the roller bearing is the full complement ball bearing or a full complement roller bearing in which the positions of the rolling elements in the circumferential direction are restricted by relative interference between them, it is not necessary to provide a separate cage, or it is not necessary to applying a function of the cage to the lubricating member. For this reason, a side surface of the lubricating member adjacent to the rolling elements can be formed as a flat face, and the lubricating member can be made in a plate-like shape. As the results, it is possible to form the lubricating member in a simple shape, and hence, it is possible to simplify production steps of the roller bearing and to reduce the production cost.

A fifth aspect of the invention provides a lubricating structure of any one of the first to fourth aspects, in which the solid lubricant is graphite.
According to this structure, because the solid lubricant is graphite, it is possible to provide a favorable lubricating structure in the roller bearing which is used in a high temperature atmosphere.

According to the invention, the lubricating member in an annular shape formed of the solid lubricant is arranged on the side surfaces of the rolling elements in the axial direction, and the lubricating member is urged against the rolling elements by the resilient member. As the results, it is possible to lubricate the roller bearing by means of the lubricating member and the resilient member in such environment that grease and oil cannot be used. Moreover, a structure in which the rolling elements are incorporated into the pockets of the cage which is formed of the solid lubricant, as in the related art, is eliminated, whereby it is possible to depress breakage of components at a time of assembling the roller bearing and to enhance the yield.

### BRIEF DESCRIPTION OF THE DRAWINGS

Fig. 1 is a vertical sectional view of a deep groove ball bearing to which a lubricating structure according to the invention is applied.
Fig. 2 is a sectional view of a part of the deep groove ball bearing in a circumferential direction taken along a line A-A in Fig. 1.
Fig. 3 is an exploded perspective view of the deep groove ball bearing.
Fig. 4 is a sectional view of a part of the deep groove ball bearing showing an arrangement in another example of Fig. 2.

### DETAILED DESCRIPTION OF THE PREFERRED EMBODIMENTS

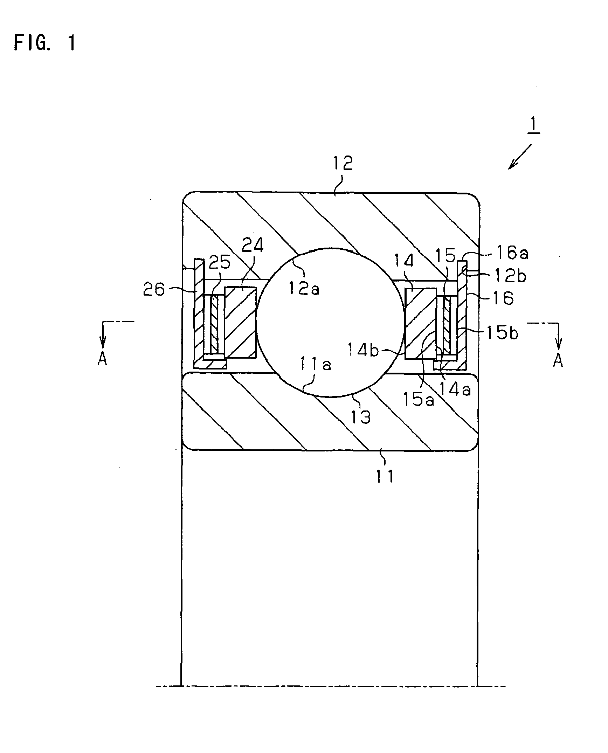

Now, the lubricating structure of the roller bearing according to an embodiment of the invention will be described with reference to Figs. 1 to 3.

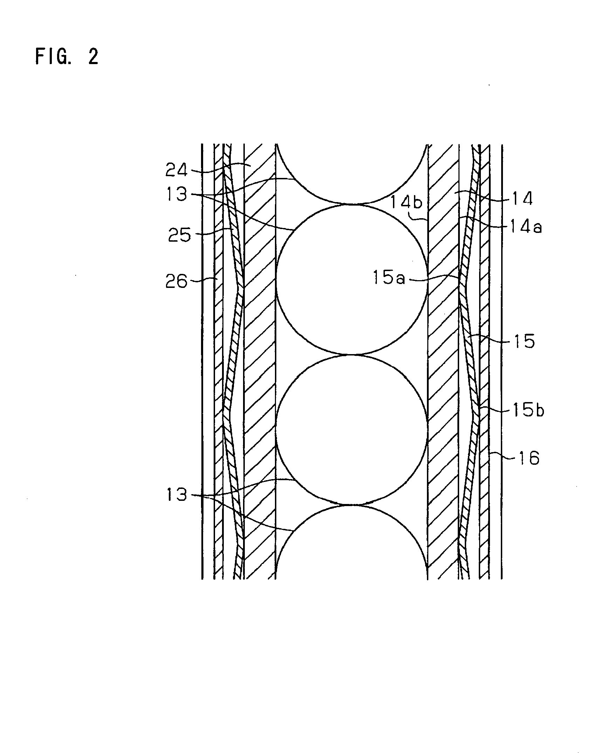

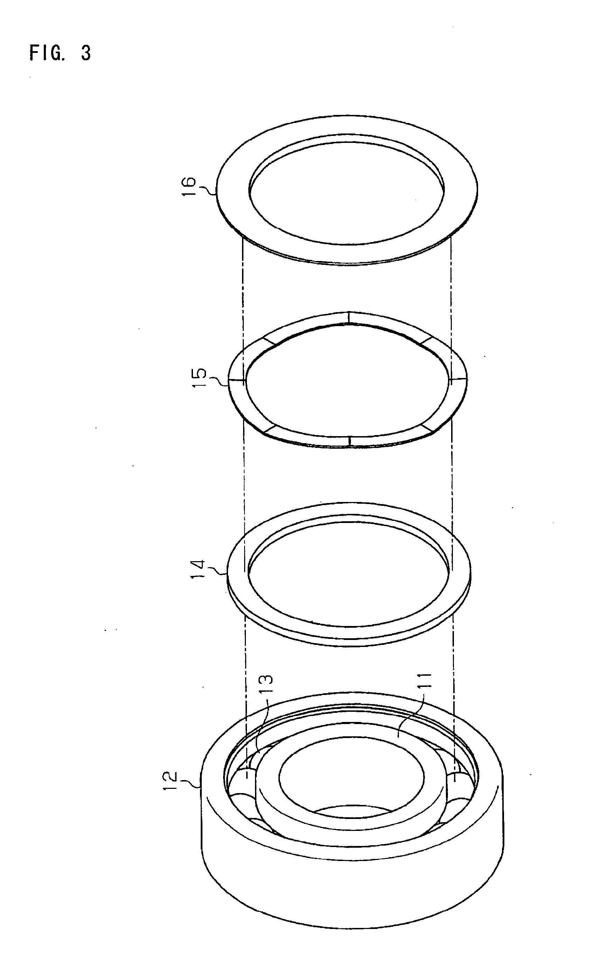

Fig. 1 is a vertical sectional view of a deep groove ball bearing 1 to which the lubricating structure according to the invention is applied, Fig. 2 is a sectional view of a part of the deep groove ball bearing 1 in a circumferential direction taken along a line A-A in Fig. 1, and Fig. 3 is an exploded perspective view of the deep groove ball bearing 1. As shown in Fig. 1, the deep groove ball bearing 1 includes an inner ring 11 formed in an annular shape, an outer ring 12 formed in an annular shape coaxially with the inner ring 11, and a plurality of balls 13 as the rolling elements which are disposed between the inner ring 11 and the outer ring 12 in the circumferential direction. A raceway surface 11a for the balls 13 is formed on an outer peripheral surface of the inner ring 11, and a raceway surface 12a for the balls 13 is formed on an inner peripheral surface of the outer ring 12. The balls 13 are disposed between the raceway surface 11a and the raceway surface 12a. The deep groove ball bearing 1 is a full complement ball bearing in which positions of the balls 13 in the circumferential direction are restricted by relative interference between the adjacent balls 13, as shown in Fig. 2. Moreover, the deep groove ball bearing 1 is a roller bearing which is used in such environment that grease and oil cannot be used as the lubricant in a high temperature atmosphere or the like.

The lubricating structure for lubricating the deep groove ball bearing 1 of this type includes a graphite ring 14 formed of graphite as solid lubricant, and a wave washer 15 which urges the graphite ring 14 against the balls 13. The graphite ring 14 as a lubricating member is formed in a shape of an annular plate, and disposed on side surfaces of a plurality of the balls 13 in the axial direction. The wave washer 15 as a resilient member is formed of an annular plate so as to wave in the axial direction, and arranged outside of the graphite ring 14, that is, an opposite side to the balls 13 with respect to the graphite ring 14. An inner surface 15a of the wave washer 15 presses an outer face 14a of the graphite ring 14 thereby to urge the graphite ring 14 against the balls 13. As the results, an inner surface 14b of the graphite ring 14 is abutted against the balls 13 thereby to press the balls 13 in the axial direction.

A shield 16 in an annular shape for preventing intrusion of a foreign matter or the like into the bearing is disposed outside the wave washer 15. The shield 16 is fixed to the outer ring 12 by inserting its outer circumferential edge 16a into a groove 12b which is formed on an inner peripheral surface of the outer ring 12. The shield 16 as a holding member is in contact with the outer face 15b of the wave washer 15 so that the wave washer 15 may be held in a compressed state, and falls of the graphite ring 14 and the wave washer 15 can be prevented.

The graphite ring 14, the wave washer 15 and the shield 16 are assembled, by arranging the graphite ring 14 and the wave washer 15 in an overlapped manner on the side surfaces of the balls 13 in the axial direction, as shown in Fig. 3, and by fixing the shield 16 to the outer ring 12.

Moreover, on the opposite side to the side surface of the balls 13 in the axial direction where the graphite ring 14 is arranged, there are assembled a graphite ring 24, a wave washer 25 and a shield 26 which have the same functions and structures as the graphite ring 14, the wave washer 15 and the shield 16, in a symmetrical position with respect to the balls 13.

Then, lubricating function of the deep groove ball bearing 1 will be described. When the inner ring 11 and the outer ring 12 rotate relative to each other, the balls 13 start to rotate between the raceway surface 11a and the raceway surface 12a. As the balls 13 rotate, the balls 13 slide along the inner surface 14b of the graphite ring 14, and graphite is transferred from the graphite ring 14 to the balls 13. The balls 13 make rolling motions while they spin in different directions from rotation direction of the inner ring 11 or the outer ring 12 due to preload applied between the inner ring and the outer ring. As the results, the graphite which has been transferred is scattered all over the raceway surface 11a and the raceway surface 12a. In this manner, the graphite is present between the balls 13 and the raceway surface 11a and the raceway surface 12a, whereby lubrication of the deep groove ball bearing 1 is performed.

According to the lubricating structure of the roller bearing in the above described embodiment, the following advantages can be obtained.
(1) In the above described embodiment, the graphite rings 14, 24 are arranged on the side surfaces of the balls 13 in the axial direction, and the graphite rings 14, 24 press the balls 13 by urging forces of the wave washers 15, 25. Therefore, the graphite is transferred to the balls 13 by the rollingmotions of the balls 13, whereby lubrication of the deep groove ball bearing 1 can be performed. Moreover, because the graphite rings 14, 24 and the wave washers 15, 25 are assembled from the side surfaces of the balls 13 in the axial direction, such a structure in which the rolling elements are incorporated into the pockets of the cage, as in the related art, is eliminated. As the results, it is possible to depress breakage of components at a time of assembling the roller bearing, and to enhance the yield of the roller bearing.

(2) In the above described embodiment, because the graphite rings 14, 24 are held in a compressed state with respect to the balls 13 by the wave washers 15, 25 in an annular shape which are retained by the shields 16, 26. Therefore, the graphite rings 14, 24 in an annular shape can be totally pressed by employing the wave washers 15, 25 having a simple shape. In this manner, it is possible to construct the lubricating structure so that the graphite can be reliably transferred to a plurality of the balls 13 which are provided in the circumferential direction.

(3) In the above described embodiment, because the graphite rings 14, 24 are provided on the opposite side surfaces of the balls 13 in the axial direction, and respectively urged against the balls 13, the balls 13 can be held in good balance by means of the graphite rings 14, 24 on both the side surfaces. Moreover, because contact points between the graphite rings 14, 24 and the balls 13 increase, it is possible to enhance the lubricating effects of the deep groove ball bearing 1.

(4) In the above described embodiment, because the deep groove ball bearing 1 is the full complement ball bearing in which the positions of the balls 13 in the circumferential direction are restricted by relative interference between them, it is not necessary to provide the cage, and it is not necessary to apply the function of the cage to the graphite rings 14, 24. For this reason, the side surfaces of the graphite rings 14, 24 adjacent to the balls 13 can be formed as flat surfaces, and the graphite rings 14, 24 can be made in a simple structure in a shape of an annular plate. As the results, the graphite rings 14, 15 can be easily machined, and hence, it is possible to simplify the production steps and to reduce the production cost.

Further, the above described embodiment may be modified as follows.
Although the invention is applied to the full complement ball bearing in the above described embodiment, it is possible to apply the invention to a roller bearing of full complement roller bearing. In case where the graphite rings 14, 24 as the lubricating member are pressed against side surfaces of the rollers of the roller bearing, it is also possible to favorably lubricate the side surfaces of the rollers where lubrication is required most.

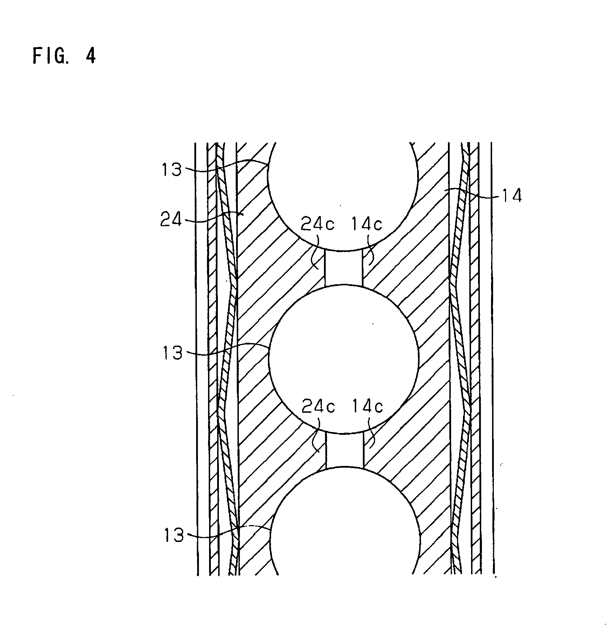

Although the invention is applied to the bearing in which the rolling elements are arranged in a single row in the above described embodiment, it is possible to apply the invention to a bearing in which the rolling elements are arranged in a plurality of rows.
Although the deep groove ball bearing 1 is constructed as the full complement ball bearing in the above described embodiment, the deep groove ball bearing 1 may be so constructed that the graphite rings 14, 15 are interposed between the adjacent balls 13. Fig. 4 shows an arrangement of the balls 13 and the graphite rings 14, 24 in a sectional view similar to Fig. 2. Projected parts 14c, 24c formed in the graphite rings 14, 24 are present between the adjacent balls 13. Outer peripheries of the projected parts 14c,' 24c are formed so as to follow an outer contour of the balls 13. By forming the ball bearing in this manner, a larger contact area can be obtained between the graphite rings 14, 24 and the balls 13, and hence, it is possible to enhance the lubricating effect of the deep groove ball bearing 1.

Although the graphite rings 14, 24 are provided on opposite side surfaces of the balls in the axial direction in the above described embodiment, the graphite ringmaybe provided on either one of the side surfaces of the ball 13.

Although the wave washers 15, 25 are employed as the resilient members for urging the graphite rings 14, 24 against the balls 13 in the above described embodiment, other resilient members may be employed such as a rubber member, a helical compression spring, etc. in an annular shape.

Although the wave washers 15, 25 are held by means of the shields 16, 26 to give urging force to the graphite rings 14, 24 in the above described embodiment, it is possible to form the shield 16, 26 of leaf spring, so that the shields 16, 26 as the resilient members may directly give the urging force to the graphite rings 14, 24.

Although the graphite rings 14, 24 formed of graphite are employed as the lubricating members in the above described embodiment, other solid lubricants, for example, an annular member formed of molybdenum disulfide or fluoric resin may be employed. Moreover, the graphite rings 14, 24 may be formed in such a manner that only surface layers at positions where the balls 13 are pressed may be formed of graphite.

## Claims

1. A lubricating structure of a roller bearing including an inner ring, an outer ring and a plurality of rolling elements disposed between the inner and outer rings in a circumferential direction, the lubricating structure comprising:
an annular lubricating member that is formed of solid lubricant and arranged on a side surface of the rolling elements in an axial direction; and
a resilient member that urges the lubricating member against the rolling elements.

2. The lubricating structure according to claim 1, wherein
the resilient member comprises an annular wave washer which urges the lubricating member, and
the lubricating structure further comprises a holding member that holds the wave washer in a compressed state.

3. The lubricating structure according to claim 1, wherein the two lubricating members are respectively provided on the opposite side surfaces of the rolling elements in the axial direction.

4. The lubricating structure according to claim 1, wherein the roller bearing is a full complement ball bearing or full complement roller bearing in which positions of the rolling elements in the circumferential direction are restricted by relative interference between the adjacent rolling elements.

5. The lubricating structure according to claim 1, wherein the solid lubricant comprises graphite.
